# EUROPEAN PATENT SPECIFICATION

(11) **EP 2 648 431 B1**
(45) Date of publication and mention of the grant of the patent: **26.12.2018**
(21) Application number: 11844915.6
(22) Date of filing: 20.06.2011
(51) Int. Cl.: H04W 4/16, H04M 3/54

(54) **METHOD AND SYSTEM FOR PROCESSING LATE CALL FORWARDING OF A USER**
VERFAHREN UND SYSTEM ZUR VERARBEITUNG SPÄTER ANRUFWEITERLEITUNGEN EINES BENUTZERS
PROCÉDÉ ET SYSTÈME PERMETTANT DE TRAITER UN TRANSFERT D'APPEL DIT « LATE » D'UN UTILISATEUR

(30) Priority: 01.12.2010 CN 201010568988
(43) Date of publication of application: 09.10.2013
(73) Proprietor: ZTE Corporation, Shenzhen, Guangdong 518057 (CN)
(72) Inventor: ZHANG, Hongxia, Guangdong 518057 (CN); WANG, Zhaofeng, Guangdong 518057 (CN)
(74) Representative: Dossmann, Gérard
(86) International application number: PCT/CN2011/075982
(87) International publication number: WO 2012/071883

(56) References cited:
- CN-A- 101 431 738
- CN-A- 102 045 672
- US-A1- 2002 167 906
- ZTE ET AL: "Enhanced Optimal Routeing for Late Call Forwarding", 3GPP DRAFT; C4-103149-23079-ENHANCED FOR LATE CF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Jacksonville; 20101115, 12 November 2010 (2010-11-12), XP050483560, [retrieved on 2010-11-12]
- "3rd Generation Partnership Project; Technical Specification Group Core Network; Support of Optimal Routeing (SOR); Technical realization (Release 9)", 3GPP DRAFT; 23079-900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 December 2009 (2009-12-18), XP050911847, Retrieved from the Internet: URL:http://www.3gpp.org/ftp/Specs/2014-12/ Rel-9/23_series/ [retrieved on 2009-12-18]
- "3rd Generation Partnership Project; Technical Specification Group Core Network; Technical realization of Operator Determined Barring (ODB) (Release 9)", 3GPP DRAFT; 23015-900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 December 2009 (2009-12-18), XP050911843, Retrieved from the Internet: URL:http://www.3gpp.org/ftp/Specs/2014-12/ Rel-9/23_series/ [retrieved on 2009-12-18]

## Description

### Field of the Invention

The present invention relates to the field of communications, and in particular to a method and system for processing late call forwarding of a subscriber.

### Background of the Invention

With the rapid increase of the communication services, the speech path detour among offices may occur under the following circumstances (supposing that the calling subscriber is subscriber A, the called subscriber is subscriber B, and the late forwarding is forwarded to subscriber C): the subscriber A dials the subscriber B, and the subscriber B implements late call forwarding, then the speech path detour may occur when the Visited Mobile Switching Center (VMSC) of the subscriber B and the VMSC of the subscriber C are different.

There are many specific subdivision situations, and the examples of scenes are as follows (not limited by the following scenes):
1), the subscriber B and the subscriber C belong to the same home place, the subscriber B implements roaming, and the subscriber A dials the subscriber B, then the subscriber B is late forwarded to the subscriber C;
2), the subscriber B and the subscriber C have the same home Mobile Switching Center (MSC), the subscriber C implements roaming, and the subscriber B does not implement roaming, the subscriber A dials the subscriber B, the subscriber B is late forwarded to the subscriber C;
3), the subscriber B and the subscriber C have the same home MSC, both of the subscriber B and the subscriber C implement roaming, and have different VMSCs, the subscriber A dials the subscriber B, the subscriber B is late forwarded to the subscriber C;
4), the subscriber B and the subscriber C have different home MSCs, both of the subscribers B and C do not implement roaming, the subscriber A dials the subscriber B, and the subscriber B is late forwarded to the subscriber C;
5) the subscriber B and the subscriber C have different home MSCs, both of the subscriber B and the subscriber C implement roaming, and have different VMSCs, the subscriber A dials the subscriber B, the subscriber B is late forwarded to the subscriber C;
6), the subscriber B and the subscriber C have different home MSCs, either the subscriber B or the subscriber C implements roaming, and the subscriber B and the subscriber C have different VMSCs, the subscriber A dials the subscriber B, the subscriber B is late forwarded to the subscriber C.

One of the application scenes in 6) is taken as an example to be described as follows:

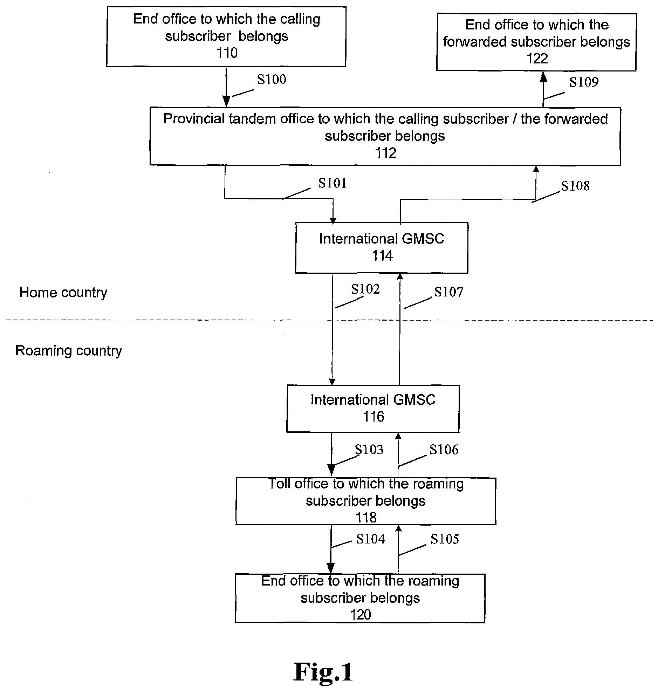

Fig. 1 shows a speech path routing diagram in the case that the subscriber in the home country dials the international roaming subscriber which is late forwarded to the subscriber in the home country according to the conventional art, including the parts such as: an end office 110 to which the calling subscriber of the home country belongs, a provincial tandem office 112 to which the calling subscriber/ the forwarded subscriber (to who the later call forwarding is forwarded) belongs, an international Gateway Mobile Switching center (GMSC) of the home country 114, an international GMSC of the roaming country 116, a toll office 118 to which the roaming subscriber of the roaming country belongs, an end office 120 to which the roaming subscriber of the roaming country belongs, an end office 122 to which the forwarded subscriber belongs.

The above parts implement the following steps:
S100, the calling subscriber calls the local called subscriber, the called subscriber is roaming to other countries, the speech path is connected to the provincial tandem office to which the calling subscriber/the forwarded subscribe belongs from the end office to which the calling subscriber belongs.
S101, the call is connected to the international GMSC of the home country;
S102, the call is connected to the international GMSC of the called roaming country;
S103, the call is connected to the toll office to which the called roaming subscriber of the roaming country belongs;
S104, the call is connected to the end office to which the called roaming subscriber of the roaming country belongs;
S105, the called subscriber implements late call forwarding, and is forwarded to the subscriber of the home country, the speech path is connected to the toll office to which the called roaming subscriber of the roaming country belongs from the end office to which the called roaming subscriber of the roaming country belongs;
S106, the call is connected to the international GMSC of the called roaming country from the toll office to which the called roaming subscriber of the roaming country belongs;
S107, the call is connected to the international GMSC of the home country;
S108, the call is connected to the provincial tandem office which the forwarded subscriber belongs to;
S109, the call is connected to the end office to which the forwarded subscriber belongs.

It shows that the speech path detour is formed between the Step S101 to the Step S108 in the speech path connection steps.

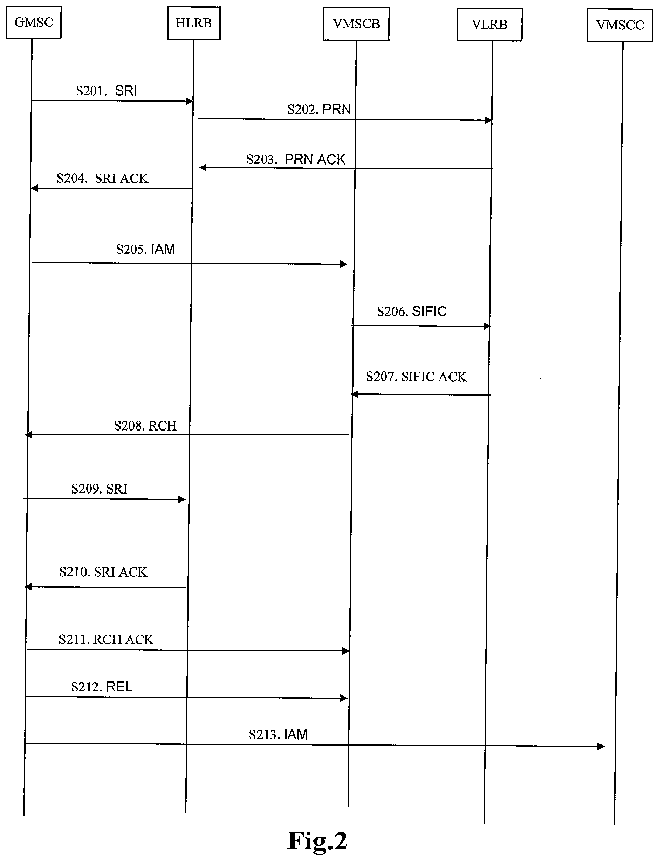

Fig. 2 shows a flow diagram of an optimization routing function according to the conventional art. As shown in Fig. 2, in order to conveniently show the figure, in the Fig. 2, the Gateway Mobile Switching Center (GMSC) of a visited network which the calling subscriber belongs to is represented as GMSC, the Home Location Register (HLR) of the called subscriber is represented as HLRB, the Visitor Location Register (VLR) of the roaming place of the called subscriber is represented as VLRB, the VMSC of the roaming place of the called subscriber is represented as VMSCB, the VMSC to which the forwarded subscriber belongs is represented as VMSCC. the flow includes the following steps:
S201, the calling subscriber dials the local called subscriber, the called subscriber is roaming to other countries, the GMSC sends a Send routing Information (SRI) message which carries a preferred route-related information to the HLRB;
S202, the HLRB sends a Provide Roaming Number (PRN) message to the VLRB, wherein the message carries the preferred route-related information;
S203, the VLRB returns a Provide Roaming Number Acknowledge (PRN ACK) message to the HLRB, wherein the message carries the preferred route-related information;
S204, the HLRB sends a SRI Acknowledge (SRI ACK) message to the GMSC, wherein the message carries the preferred route-related information;
S205, the GMSC sends an Initial Address Message (IAM) to the VMSCB;
S206, the VMSCB sends a Send Information for Incoming Call (SIFIC) message to the corresponding VLRB;
S207, the VLRB sends a SIFIC Acknowledge (SIFIC ACK) to the corresponding VMSCB;
S208, the VMSCB sends a request to resume call handling (RCH) to the GMSC according to the obtained forwarding information so as to indicate the GMSC to implement Optimal Routing;
S209, after receiving the Optimal Routing handling message, the GMSC sends the SRI message to the HLRB to request the forwarding information;
S210, the HLRB sends the SRI ACK message to the GMSC;
S211, the GMSC judges that the calling subscriber and the forwarded subscriber are in the same country, and then sends the RCH Acknowledge (RCH ACK) message to the original VMSCB;
S212, the GMSC sends a release message to the original VMSCB;
S213, the GMSC searches the routing according to the forwarded number, and sends the IAM to the VMSCC to which the forwarding subscriber belongs.

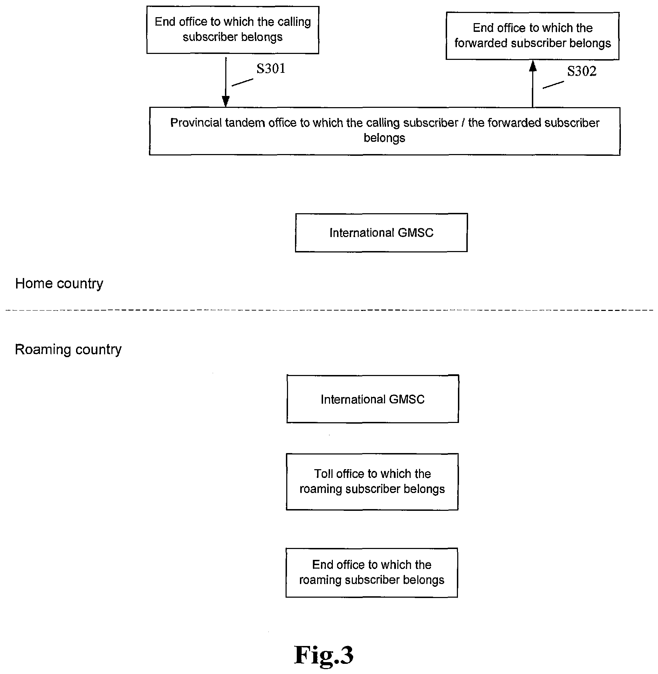

Fig. 3 shows a speech path routing diagram of an optimization routing function according to conventional art, including the steps as follows:
S301, the speech path is connected to the provincial tandem office to which the calling subscriber/ the forwarded subscriber belongs from the end office to which the calling subscriber belongs;
S302, the call is connected to the end office to which the forwarded subscriber belongs.

From the above description, it can be seen that although the preferred routing function can save the speech path, it requires that both of the visited place and the home place can support the function; actually, the visited place cannot be guaranteed to support the preferred routing function, namely, the route optimization method for the forwarding call in the conventional art cannot be widely applied; the problems of causing speech path detour in sessions cannot be avoided in the practical application, which causes waste of the session resources.

Aiming at the problems that the speech path detour in sessions cannot be avoided in the conventional art, thereby causing waste of the session resources, no effective solution has been proposed at present.

XP050483560, ZTE ET AL, "Enhanced Optimal Routeing for Late Call Forwarding", 3GPP DRAFT; C4-103149-23079-ENHANCED FOR LATE CF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20101112), vol. CT WG4, no. Jacksonville; 20101115, provides a method of forwarding call without numbers in VPLMN,
XP050911847, 3rd Generation Partnership Project; Technical Specification Group Core Network; Support of Optimal Routeing (SOR); Technical realization (Release 9)", (20091218), 3GPP DRAFT; 23079-900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Specs/2014-12/Rel-9/23_series/, 20091218, provides a method of forwarding call with an conventional optimization routing function, and
US2002/0167906 A1 provides a multiple-protocol home location register and method of use;
however, the above mentioned problem still remains unsolved.

### Summary of the Invention

The main purpose of the present invention is to provide a method and system for processing late call forwarding of a subscriber, in order to solve the problems that the speech path detour cannot be avoided in sessions, thus causing waste of the session resources. The invention is defined by the independent claims.

According to one aspect, the present invention provides a method for processing late call forwarding of the subscriber, including the following steps: a calling subscriber calls a called subscriber; the HLRB sends a SRI ACK message carrying late call forwarding information to the GMSC; when the VMSC of the called subscriber finds that the called subscriber cannot answer, the GMSC connects the call to the subscriber indicated in the late call forwarding information.

After the calling subscriber calls the called subscriber, the method for processing late call forwarding of the subscriber further includes: the GMSC sends a SRI message to the HLRB; the HLRB sends a PRN message to the VMSC of the called subscriber; the VMSC of the called subscriber sends a PRN ACK message to the HLRB; after receiving the PRN ACK message, the HLRB implements the step of sending the SRI ACK message carrying the late call forwarding information to the GMSC.

The step that the GMSC connects the call to the subscriber indicated in the late call forwarding information includes: the GMSC receives a call release message carrying the release cause which is sent by the VMSC of the called subscriber; the GMSC connects the call to the subscriber indicated in the late call forwarding information according to the release cause and the late call forwarding information.

The call release cause includes that the called subscriber has no paging response, the called subscriber is busy, or the called subscriber has no answer; the call release message includes: a ringing message or a call progress message.

Before the calling subscriber calls the called subscriber, the method for processing late call forwarding of the subscriber further includes: the VLR of the called subscriber sends a location update request message to the HLRB; the HLRB sends an insert subscriber data request message without carrying the late call forwarding information to the VLR of the called subscriber; the VLR of the called subscriber returns an insert subscriber data acknowledge message to the HLRB; the HLRB returns a location update acknowledge message to the VLR of the called subscriber.

The called subscriber and the subscriber indicated in the late call forwarding information belong to the different VMSCs.

According to another aspect, the present invention provides a system for processing late call forwarding of the subscriber, including: an HLRB, a GMSC, and a VMSC of the called subscriber, wherein, when the calling subscriber calls the called subscriber, the HLR is configured to send the SRI ACK message carrying the late call forwarding information to the GMSC; the VMSC is configured to page the called subscriber; the GMSC is configured to connect the call to the subscriber indicated in the late call forwarding information when the VMSC of the called subscriber finds that the called subscriber cannot answer.

After the calling subscriber calls the called subscriber, the GMSC is further configured to send the SRI message to the HLRB; the HLRB is further configured to send the PRN message to the VMSC of the called subscriber; the VMSC of the called subscriber is further configured to send the PRN ACK message to the HLRB; after receiving the PRN message, the HLRB is further configured to implement the step of sending the SRI ACK message carrying the late call forwarding information to the GMSC.

The GMSC is further configured to receive the call release message carrying the release cause which is sent by the VMSC of the called subscriber, and to connect the call to the subscriber indicated in the late call forwarding information according to the release cause and the late call forwarding information.

The system further includes a VLR of the called subscriber; before the calling subscriber calls the called subscriber, the VLR of the called subscriber is configured to send the location update request message to the HLRB; the HLRB is further configured to send the insert subscriber data request message without carrying the late call forwarding information to the VLR of the called subscriber; the VLR of the called subscriber is further configured to return the insert subscriber data acknowledge message to the HLRB; the HLRB is further configured to return the location update acknowledge message to the VLR of the called subscriber.

The called subscriber and the subscriber indicated in the late call forwarding information belong to the different VMSCs.

The disclosure adopts direction connection between the calling user and the forwarded user without the detour through the VMSC of the called subscriber, solves the problems that the speech path detour cannot be avoided in sessions, the problem causing waste of the session resources, and the present invention further achieves the effect of saving the network resources.

### Brief Description of the Drawings

The drawings, provided for further understanding of the present invention and forming a part of the specification, are used to explain the present invention together with embodiments of the present invention rather than to limit the present invention, wherein:
Fig. 1 shows a speech path diagram in the case that the subscriber of the home country dials the international roaming subscriber which is late forwarded to the subscriber of the home country according to the conventional art;
Fig. 2 shows a flow diagram of an optimized routing function according to the conventional art;
Fig. 3 shows a speech path routing diagram of an optimized routing function according to the conventional art;
Fig. 4 shows a preferred flowchart of a method for processing late call forwarding of the subscriber according to an embodiment of the present invention;
Fig. 5 shows a preferred structural diagram of a system for processing late call forwarding of the subscriber according to an embodiment of the present invention;
Fig. 6 shows a call flow diagram of a method for processing late call forwarding of the subscriber according to an embodiment of the present invention; and
Fig. 7 shows a location update flow diagram of a method for processing late call forwarding of the subscriber according to an embodiment of the present invention.

### Detailed Description of the Embodiments

The preferred embodiments are described in conjunction with the drawings as follows. It shall be understood that the preferred embodiments described herein are only used to describe and explain the present invention and shall not be construed as improper limitations on the same. The embodiments of the present application and the features of the embodiments can be combined with each other if there is no conflict.

### Embodiment 1

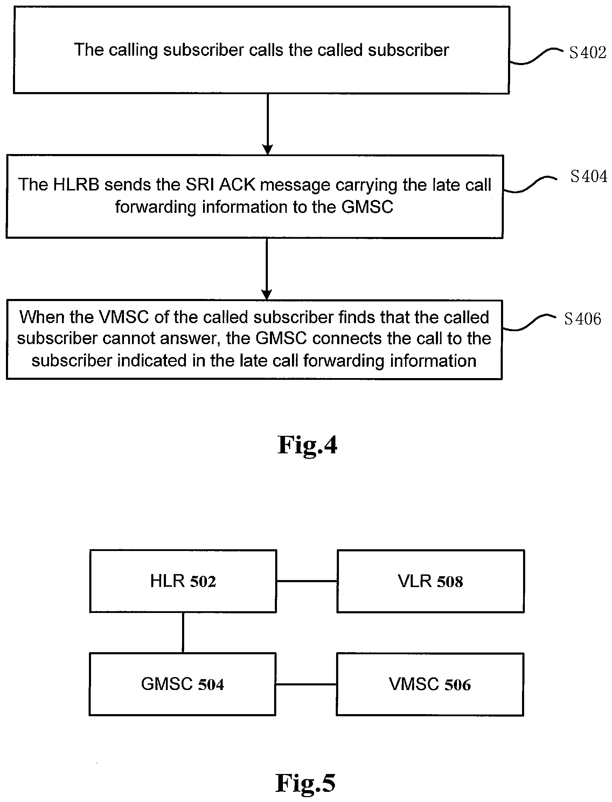

Fig. 4 shows a preferred flowchart of a method for processing late call forwarding of the subscriber according to an embodiment of the present invention, including the following steps:
S402, the calling subscriber calls the called subscriber;
S404, the HLRB sends the SRI ACK message carrying the late call forwarding information to the GMSC;
S406, when the VMSC of the called subscriber finds that the called subscriber cannot answer, the GMSC connects the call to the subscriber indicated in the late call forwarding information.

In the preferred embodiment, the direct connection between the calling subscriber and the forwarded subscriber is adopted without having detour of the VMSC of the called subscriber, the problems that the speech path detour cannot be avoided in sessions, which may cause waste of the session resources, is solved. Furthermore, the effect of saving the network resources is achieved.

Preferably, after the calling subscriber calls the called subscriber, the method for processing late call forwarding of the subscriber further includes: the GMSC sends a SRI message to the HLRB; the HLRB sends the PRN message to the VMSC of the called subscriber; the VMSC of the called subscriber sends the PRN ACK message to the HLRB; after receiving the PRN ACK message, the HLRB implements the step of sending the SRI ACK message carrying the late call forwarding information to the GMSC. In the preferred embodiment, the SRI ACK message can guarantee that the GMSC obtains the late call forwarding information of the subscriber.

Preferably, the step that the GMSC connects the call to the subscriber indicated in the late call forwarding information includes: the GMSC receives a call release message carrying the release cause which is sent by the VMSC of the called subscriber; the GMSC connects the call to the subscriber indicated in the late call forwarding information according to the release cause and the late call forwarding information. In the preferred embodiment, the network resources can be further saved by directly connecting the GMSC and the subscriber indicated in the late call forwarding information.

Preferably, the reason that the called subscriber cannot answer includes that the called subscriber has no paging response, the called subscriber is busy, or the called subscriber has no answer; the release message includes: a ringing message or a call progress message.

Preferably, before the calling subscriber calls the called subscriber, the method for processing late call forwarding of the subscriber further includes: the VLR of the called subscriber sends a location update request message to the HLRB; the HLRB sends an insert subscriber data request message without carrying the late call forwarding information to the VLR of the called subscriber; the VLR of the called subscriber returns an insert subscriber data acknowledge message to the HLRB; the HLRB returns a location update acknowledge message to the VLR of the called subscriber. In the preferred embodiment, by updating the subscriber information of the HLR, it can guarantee that the VLR of the called subscriber does not include the late call forwarding information, and does not conflict with the GMSC which includes the late call forwarding information.

Preferably, the called subscriber and the subscriber indicated in the late call forwarding information belong to different VMSCs. In the preferred embodiment, the network resources can be further saved by directly connecting the GMSC and the subscriber indicated in the late call forwarding information, without circuitous connection. The different MSCs above-mentioned refer to different VMSCs.

### Embodiment 2

Fig. 5 shows a preferred structural diagram of a system for processing late call forwarding of the subscriber according to an embodiment of the present invention, including: the HLRB 502, the GMSC 504, and the VMSC 506 of the called subscriber which are connected in sequence, wherein, when the calling subscriber calls the called subscriber, the HLRB 502 is configured to send the SRI ACK message carrying the late call forwarding information to the GMSC 504; the VMSC 506 is configured to page the called subscriber; the GMSC 504 is configured to connect the call to the subscriber indicated in the late call forwarding information when the VMSC 506 of the called subscriber finds that the called subscriber cannot answer.

In the preferred embodiment, the direct connection between the calling subscriber and the forwarded subscriber is adopted without having detour of the VMSC of the called subscriber, the problems that the speech path detour cannot be avoided in sessions, which may cause waste of the session resources, is solved. Furthermore, the effect of saving the network resources is achieved.

Preferably, after the calling subscriber calls the called subscriber, the GMSC 504 is further configured to send the SRI message to the HLRB 502; the HLRB 502 is further configured to send the PRN message to the VMSC 506 of the called subscriber; the VMSC 506 of the called subscriber is further configured to send a PRN ACK message to the HLRB 502; after receiving the PRN ACK message, the HLRB 502 is further configured to implement the step of sending the SRI ACK message carrying the late call forwarding information to the GMSC 504. In the preferred embodiment, the SRI ACK message can guarantee that the GMSC obtains the late call forwarding information of the subscriber.

Preferably, the GMSC 504 is further configured to receive the call release message carrying the release cause which is sent by the VMSC 506 of the called subscriber, and to connect the call to the subscriber indicated in the late call forwarding information according to the release cause and the late call forwarding information. In the preferred embodiment, the network resources can be further saved by directly connecting the GMSC and the subscriber indicated in the late call forwarding information.

Preferably, the system for processing late call forwarding of the subscriber further includes a VLR 508 of the called subscriber, wherein the VLR 508 is connected with the HLRB 502. Before the calling subscriber calls the called subscriber, the VLR 508 of the called subscriber is configured to send the location update request message to the HLRB 502; the HLRB 502 is further configured to send the insert subscriber data request message without carrying the late call forwarding information to the VLR 508 of the called subscriber; the VLR 508 of the called subscriber is further configured to return the insert subscriber data acknowledge message to the HLRB 502; the HLRB 502 is further configured to return the location update acknowledge message to the VLR 508 of the called subscriber. In the preferred embodiment, it can guarantee that the VLR of the called subscriber does not include the late call forwarding information, and does not conflict with the GMSC which includes the late call forwarding information.

Preferably, the called subscriber and the subscriber indicated in the late call forwarding information belong to the different MSCs. In the preferred embodiment, the network resources can be further saved by directly connecting the GMSC and the subscriber indicated in the late call forwarding information, without circuitous connection. The different MSCs above-mentioned refer to different VMSCs.

### Embodiment 3

The following solutions are adopted in the embodiment:
1), when the called subscriber initiates location update, the HLR does not carry the late call forwarding information of the subscriber to the VLR of the visited place.
2), the calling subscriber calls the called subscriber, when the GMSC requests the routing information from the HLRB, the HLR returns the late call forwarding information of the called subscriber to the GMSC which requests the routing.
3), when the call release is caused as the called subscriber has no paging response, or is busy, or has no answer and the like, the GMSC which initiates routing in Step 2) connects the call to the subscriber indicated in the corresponding late call forwarding information according to the failure cause brought by the visited place of the called subscriber and the late call forwarding information returned by the HLR in Step 2).

From the technical solution of the embodiment, it can be seen that the speech path can be saved without implementing any special treatment by the switch of the visited place of the subscriber.

### Embodiment 4

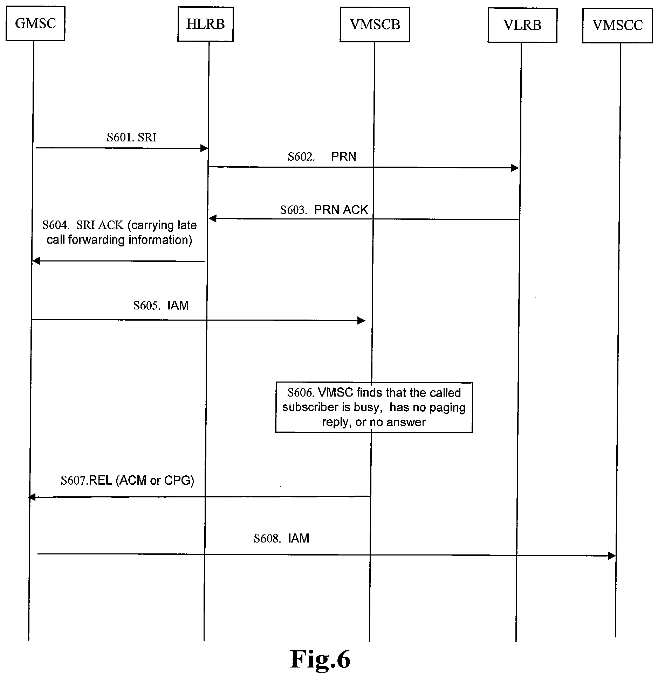

Fig. 6 shows a call flow diagram of a method for processing late call forwarding of the subscriber according to an embodiment of the present invention, including the following steps:
S601, the calling subscriber dials the local called subscriber, the called subscriber is roaming to other countries, the home GMSC of the called subscriber sends the SRI message to the HLRB;
S602, the HLRB sends the PRN message to the VLRB;
S603, the VLRB sends the PRN ACK message to the HLRB;
S604, the HLRB sends the SRI ACK message to the home GMSC of the called subscriber, wherein the message carries the late call forwarding information of the called subscriber;
S605, the home GMSC of the called subscriber sends the IAM to the VMSCB;
S606, the VMSCB finds that the called subscriber is busy, or has no paging response, or has no answer;
S607, the VMSCB sends the release massage (the ringing message or the call progress message) to the home GMSC to indicate call failure;
S608, the home GMSC of the called subscriber confirms the call forwarded number according to the late call forwarding information in Step S604 and the release cause in Step S607, and then routes according to the call forwarded number, and sends the IAM to the VMSCC.

### Embodiment 5

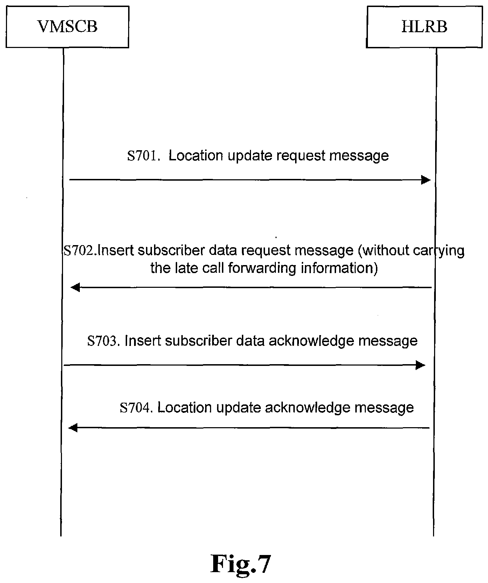

Fig. 7 shows a location update flow diagram of a method for processing late call forwarding of the subscriber according to an embodiment of the present invention, including the following steps:
S701, the subscriber is roaming to other countries, the VLR of the visited place of the subscriber sends the location update request message to the HLR of the subscriber;
S702, the HLR of the subscriber sends the insert subscriber data request message without carrying the late call forwarding information to the VLR of the visited place;
S703, the VLR of the visited place returns the insert subscriber data acknowledge message to the HLR of the subscriber;
S704, the HLR of the subscriber returns the location update acknowledge message to the VLRB.

From the above description, it can be seen that the present invention realizes the following technical effects:
via the specific treatment for HLR of the home network of the called subscriber and the GMSC which initiates the routing, the present invention provides an implementation method and device for saving speech path during call forwarding without implementing any change by the VMSC of the called visited place. The method and device can solve the speech path detour during the late call forwarding of the called subscriber, thereby saving the network resources.

The present invention not only is suitable for the situation that the mobile subscriber to dial to mobile subscriber, but also is suitable for the fixed subscriber to dial the mobile subscriber, and the forwarded subscriber can be both of the mobile subscriber and the fixed subscriber.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. are all included in the scope of the protection of the present invention.

## Claims

1. A method for processing late call forwarding of a subscriber, comprising:
a calling subscriber calling a called subscriber (S402);
a Home Location Register, HLR, of the called subscriber sending a Send Routing Information Acknowledge (SRI ACK) message carrying late call forwarding information to a Gateway Mobile Switching Center, GMSC (S404); and
when a Visited Mobile Switching Center, VMSC, of the called subscriber finds that the called subscriber cannot answer, the GMSC connecting the call to the subscriber indicated in the late call forwarding information (S406);
wherein before the calling subscriber calls the called subscriber, the method further comprises: a Visitor Location Register, VLR, of the called subscriber sending a location update request message to the HLR of the called subscriber; the HLR of the called subscriber sending an insert subscriber data request message without carrying the late call forwarding information to the VLR of the called subscriber; the VLR of the called subscriber returning an insert subscriber data acknowledge message to the HLR of the called subscriber; and the HLRB returning a location update acknowledge message to the VLR of the called subscriber.

2. The method according to claim 1, **characterized in that** after the calling subscriber calls the called subscriber, the method further comprises:
the GMSC sending a Send Routing Information (SRI) message to the HLR of the called subscriber;
the HLR of the called subscriber sending a Provide Roaming Number (PRN) request message to the VMSC of the called subscriber;
the VMSC of the called subscriber sending a Provide Roaming Number Acknowledge (PRN ACK) message to the HLR of the called subscriber; and
after receiving the PRN ACK message, the HLR of the called subscriber implementing a step of sending the SRI ACK message carrying the late call forwarding information to the GMSC.

3. The method according to claim 1, **characterized in that** the step of the GMSC connects the call to the subscriber indicated in the late call forwarding information further comprises:
the GMSC receiving a call release message carrying a release cause which is sent by the VMSC of the called subscriber; and
the GMSC connecting the call to the subscriber indicated in the late call forwarding information according to the release cause and the late call forwarding information.

4. The method according to claim 3, **characterized in that** the call release cause comprises:
the called subscriber has no paging response, the called subscriber is busy, or the called subscriber has no answer; and the call release message comprises: a ringing message or a call progress message.

5. The method according to claim 1, **characterized in that** the called subscriber and the subscriber indicated in the late call forwarding information belong to different VMSCs.

6. A system for processing late call forwarding of a subscriber, comprising:
an Home Location Register, HLR, of a called subscriber (502), a Gateway Mobile Switching Center, GMSC (504), and a Visited Mobile Switching Center, VMSC, of the called subscriber (506), wherein when the calling subscriber calls the called subscriber, the HLR (502) is configured to send a Send Routing Information Acknowledge (SRI ACK) message carrying a late call forwarding information to the GMSC (504);
the VMSC (506) is configured to page the called subscriber; and
the GMSC (504) is configured to connect the call to a subscriber indicated in the late call forwarding information when the VMSC of the called subscriber (506) finds that the called subscriber cannot answer;
wherein the system further comprises: a Visitor Location Register, VLR, of the called subscriber(508); before the calling subscriber calls the called subscriber,
the VLR of the called subscriber (508) is configured to send a location update request message to the HLR of the called subscriber (502);
the HLR of the called subscriber (502) is further configured to send an insert subscriber data request message without carrying the late call forwarding information to the VLR of the called subscriber (508);
the VLR of the called subscriber (508) is further configured to return an insert subscriber data acknowledge message to the HLR of the called subscriber (502); and
the HLR of the called subscriber (502) is further configured to return a location update acknowledge message to the VLR of the called subscriber (508).

7. The system according to claim 6, **characterized in that** after the calling subscriber calls the called subscriber,
the GMSC (504) is further configured to send a Send Routing Information (SRI) message to the HLR of the called subscriber (502) ;
the HLR of the called subscriber (502) is further configured to send a Provide Roaming Number (PRN) request message to the VMSC of the called subscriber (506);
the VMSC of the called subscriber (506) is further configured to provide a Provide Roaming Number Acknowledge (PRN ACK) message for the HLR of the called subscriber (502); and
after receiving the PRN ACK message, the HLR of the called subscriber (502) is further configured to implement a step of sending a SRI ACK message carrying the late call forwarding information to the GMSC (504).

8. The system according to claim 6, **characterized in that** the GMSC (504) is further configured to receive a call release message carrying a release cause which is sent by the VMSC of the called subscriber (506), and to connect the call to the subscriber indicated in the late call forwarding information according to the release cause and the late call forwarding information.

9. The system according to claim 6, **characterized in that** the called subscriber and the subscriber indicated in the late call forwarding information belong to different VMSCs.

## Patentansprüche

1. Verfahren zur Verarbeitung einer verspäteten Rufweiterleitung eines Teilnehmers, das Folgendes umfasst:
ein rufender Teilnehmer ruft einen gerufenen Teilnehmer (S402);
ein Home Location Register, HLR, des gerufenen Teilnehmers sendet eine Send Routing Information Acknowledge (SRI ACK)-Nachricht, die Verspätete-Rufweiterleitung-Informationen transportiert, an ein Gateway Mobile Switching Center, GMSC (S404); und
wenn ein Visited Mobile Switching Center, VMSC, des gerufenen Teilnehmers feststellt, dass der gerufene Teilnehmer nicht antworten kann, so verbindet die GMSC den Ruf mit dem Teilnehmer, der in den Verspätete-Rufweiterleitung-Informationen angegeben ist (S406);
wobei, bevor der rufende Teilnehmer den gerufenen Teilnehmer ruft, das Verfahren des Weiteren Folgendes umfasst:
ein Visitor Location Register, VLR, des gerufenen Teilnehmers sendet eine Standortaktualisierungsanforderungsnachricht an das HLR des gerufenen Teilnehmers;
das HLR des gerufenen Teilnehmers sendet eine Teilnehmerdaten-einfügen-Anforderungsnachricht, ohne die Verspätete-Rufweiterleitung-Informationen zu transportieren, an das VLR des gerufenen Teilnehmers;
das VLR des gerufenen Teilnehmers sendet eine Teilnehmerdaten-einfügen-Bestätigungsnachricht an das HLR des gerufenen Teilnehmers zurück; und
das HLRB sendet eine Standortaktualisierungs-Bestätigungsnachricht an das VLR des gerufenen Teilnehmers zurück.

2. Verfahren nach Anspruch 1, **dadurch gekennzeichnet, dass**, nachdem der rufende Teilnehmer den gerufenen Teilnehmer gerufen hat, das Verfahren des Weiteren Folgendes umfasst:
das GMSC sendet eine Send Routing Information (SRI)-Nachricht an das HLR des gerufenen Teilnehmers;
das HLR des gerufenen Teilnehmers sendet einen Provide Roaming Number (PRN)-Anforderungsnachricht an das VMSC des gerufenen Teilnehmers;
das VMSC des gerufenen Teilnehmers sendet eine Provide Roaming Number Acknowledge (PRN ACK)-Nachricht an das HLR des gerufenen Teilnehmers; und
nach dem Empfang der PRN ACK-Nachricht implementiert das HLR des gerufenen Teilnehmers einen Schritt des Sendens der SRI ACK-Nachricht, die die Verspätete-Rufweiterleitung-Informationen transportiert, an das GMSC.

3. Verfahren nach Anspruch 1, **dadurch gekennzeichnet, dass** der Schritt, in dem das GMSC den Ruf mit dem Teilnehmer verbindet, der in den Verspätete-Rufweiterleitung-Informationen angegeben ist, des Weiteren Folgendes umfasst:
das GMSC empfängt eine Ruffreigabenachricht, die einen Freigabegrund transportiert und durch das VMSC des gerufenen Teilnehmers gesendet wird; und
das GMSC verbindet den Ruf mit dem Teilnehmer, der in den Verspätete-Rufweiterleitung-Informationen angegeben ist, gemäß dem Freigabegrund und den Verspätete-Rufweiterleitung-Informationen.

4. Verfahren nach Anspruch 3, **dadurch gekennzeichnet, dass** der Ruffreigabegrund Folgendes umfasst: der gerufene Teilnehmer hat keine Paging-Antwort, der gerufene Teilnehmer ist besetzt, oder der gerufene Teilnehmer hat keine Antwort; und die Ruffreigabenachricht Folgendes umfasst: eine Klingelnachricht oder eine Ruffortschrittsnachricht.

5. Verfahren nach Anspruch 1, **dadurch gekennzeichnet, dass** der gerufene Teilnehmer und der Teilnehmer, der in den Verspätete-Rufweiterleitung-Informationen angegeben ist, zu verschiedenen VMSCs gehören.

6. System zur Verarbeitung einer verspäteten Rufweiterleitung eines Teilnehmers, das Folgendes umfasst:
ein Home Location Register, HLR, eines gerufenen Teilnehmers (502), ein Gateway Mobile Switching Center, GMSC (504), und ein Visited Mobile Switching Center, VMSC, des gerufenen Teilnehmers (506),
wobei, wenn der rufende Teilnehmer den gerufenen Teilnehmer ruft,
das HLR (502) dafür konfiguriert ist, eine Send Routing Information Acknowledge (SRI ACK)-Nachricht, die Verspätete-Rufweiterleitung-Informationen transportiert, an das GMSC (504) zu senden;
das VMSC (506) dafür konfiguriert ist, den gerufenen Teilnehmer anzupagen; und
das GMSC (504) dafür konfiguriert ist, den Ruf mit einem Teilnehmer zu verbinden, der in den Verspätete-Rufweiterleitung-Informationen angegeben ist, wenn das VMSC des gerufenen Teilnehmers (506) feststellt, dass der gerufene Teilnehmer nicht antworten kann;
wobei das System des Weiteren Folgendes umfasst:
ein Visitor Location Register, VLR, des gerufenen Teilnehmers (508);
bevor der rufende Teilnehmer den gerufenen Teilnehmer ruft,
ist das VLR des gerufenen Teilnehmers (508) dafür konfiguriert, eine Standortaktualisierungsanforderungsnachricht an das HLR des gerufenen Teilnehmers (502) zu senden;
ist das HLR des gerufenen Teilnehmers (502) des Weiteren dafür konfiguriert, eine Teilnehmerdaten-einfügen-Anforderungsnachricht, ohne die Verspätete-Rufweiterleitung-Informationen zu transportieren, an das VLR des gerufenen Teilnehmers (508) zu senden;
ist das VLR des gerufenen Teilnehmers (508) des Weiteren dafür konfiguriert, eine Teilnehmerdaten-einfügen-Bestätigungsnachricht an das HLR des gerufenen Teilnehmers (502) zurückzusenden; und
ist das HLR des gerufenen Teilnehmers (502) des Weiteren dafür konfiguriert ist, eine Standortaktualisierungs-Bestätigungsnachricht an das VLR des gerufenen Teilnehmers (508) zurückzusenden.

7. System nach Anspruch 6, **dadurch gekennzeichnet, dass**, nachdem der rufende Teilnehmer den gerufenen Teilnehmer gerufen hat,
das GMSC (504) des Weiteren dafür konfiguriert ist, eine Send Routing Information (SRI)-Nachricht an das HLR des gerufenen Teilnehmers (502) zu senden;
das HLR des gerufenen Teilnehmers (502) des Weiteren dafür konfiguriert ist, eine Provide Roaming Number (PRN)-Anforderungsnachricht an das VMSC des gerufenen Teilnehmers (506) zu senden;
das VMSC des gerufenen Teilnehmers (506) des Weiteren dafür konfiguriert ist, einen Provide Roaming Number Acknowledge (PRN ACK)-Nachricht für das HLR des gerufenen Teilnehmers (502) bereitzustellen; und
nach dem Empfang der PRN ACK-Nachricht ist das HLR des gerufenen Teilnehmers (502) des Weiteren dafür konfiguriert, einen Schritt des Sendens einer SRI ACK-Nachricht, die die Verspätete-Rufweiterleitung-Informationen transportiert, an das GMSC (504) zu implementieren.

8. System nach Anspruch 6, **dadurch gekennzeichnet, dass** das GMSC (504) des Weiteren dafür konfiguriert ist, eine Ruffreigabenachricht zu empfangen, die einen Freigabegrund transportiert und die durch das VMSC des gerufenen Teilnehmers (506) gesendet wurde, und den Ruf mit dem Teilnehmer, der in den Verspätete-Rufweiterleitung-Informationen angegeben ist, gemäß dem Freigabegrund und den Verspätete-Rufweiterleitung-Informationen zu verbinden.

9. System nach Anspruch 6, **dadurch gekennzeichnet, dass** der gerufene Teilnehmer und der Teilnehmer, der in den Verspätete-Rufweiterleitung-Informationen angegeben ist, zu verschiedenen VMSCs gehören.

## Revendications

1. Procédé pour traiter un transfert d'appel tardif d'un abonné, comprenant :
un abonné appelant appelant un abonné appelé (S402) ;
un enregistreur de localisation nominal, HLR, de l'abonné appelé envoyant un message d'accusé de réception d'envoi d'information de routage (SRI ACK) portant des informations de transfert d'appel tardif vers un centre de commutation mobile passerelle, GMSC (S404) ; et
quand un centre de commutation mobile visité, VMSC, de l'abonné appelé trouve que l'abonné appelé ne peut pas répondre, le GMSC connectant l'appel à l'abonné indiqué dans les informations de transfert d'appel tardif (S406) ;
dans lequel avant que l'abonné appelant appelle l'abonné appelé, le procédé comprend en outre : un enregistreur de localisation des visiteurs , VLR, de l'abonné appelé envoyant une message de requête de mise à jour de localisation à l'HLR de l'abonné appelé ; l'HLR de l'abonné appelé envoyant un message de requête d'insertion de données d'abonné sans porter les informations de transfert d'appel tardif au VLR de l'abonné appelé ; le VLR de l'abonné appelé renvoyant un message d'accusé de réception d'insertion de données d'abonné à l'HLR de l'abonné appelé ; et l'HLRB renvoyant un message d'accusé de réception de mise à jour de localisation au VLR de l'abonné appelé.

2. Procédé selon la revendication 1, **caractérisé en ce qu'**après que l'abonné appelant appelle l'abonné appelé, le procédé comprend en outre :
le GMSC envoyant un message d'envoi d'information de routage (SRI) à l'HLR de l'abonné appelé ;
l'HLR de l'abonné appelé envoyant un message de requête de fourniture de numéro d'itinérance (PRN) au VMSC de l'abonné appelé ;
le VMSC de l'abonné appelé envoyant un message d'accusé de réception de fourniture de numéro d'itinérance (PRN ACK) à l'HLR de l'abonné appelé ; et après réception du message PRN ACK, l'HLR de l'abonné appelé mettant en oeuvre une étape d'envoi du message SRI ACK portant les informations de transfert d'appel tardif au GMSC.

3. Procédé selon la revendication 1, **caractérisé en ce que** l'étape où le GMSC connecte l'appel à l'abonné indiqué dans les informations de transfert d'appel tardif comprend en outre :
le GMSC recevant un message de libération de communication portant un motif de libération qui est envoyé par le VMSC de l'abonné appelé ; et
le GMSC connectant l'appel à l'abonné indiqué dans les informations de transfert d'appel tardif selon le motif de libération et les informations de transfert d'appel tardif.

4. Procédé selon la revendication 3, **caractérisé en ce que** le motif de libération de communication comprend : l'abonné appelé n'a pas de réponse de téléavertissement, l'abonné appelé est occupé, ou l'abonné appelé n'a pas de réponse ; et le message de libération de communication comprend ; un message de sonnerie ou un message de progression de l'appel.

5. Procédé selon la revendication 1, **caractérisé en ce que** l'abonné appelé et l'abonné indiqué dans les informations de transfert d'appel tardif appartiennent à différents VMSC.

6. Système pour traiter le transfert d'appel tardif d'un abonné, comprenant :
un enregistreur de localisation nominal, HLR, d'un abonné appelé (502), un centre de commutation mobile passerelle, GMSC (504), et un centre de commutation mobile visité, VMSC, de l'abonné appelé (506), dans lequel quand l'abonné appelant appelle l'abonné appelé,
l'HLR (502) est configuré pour envoyer un message d'accusé de réception d'envoi d'information de routage (SRI ACK) portant des informations de transfert d'appel tardif au GMSC (504) ;
le VMSC (506) est configuré pour téléavertir l'abonné appelé ; et
le GMSC (504) est configuré pour connecter l'appel à un abonné indiqué dans les informations de transfert d'appel tardif quand le VMSC de l'abonné appelé (506) trouve que l'abonné appelé ne peut pas répondre ;
dans lequel le système comprend en outre un enregistreur de localisation des visiteurs, VLR, de l'abonné appelé (508) ; avant que l'abonné appelant appelle l'abonné appelé,
le VLR de l'abonné appelé (508) est configuré pour envoyer un message de requête de mise à jour de localisation à l'HLR de l'abonné appelé (502) ;
l'HLR de l'abonné appelé (502) est en outre configuré pour envoyer un message de requête d'insertion de données d'abonné sans porter les informations de transfert d'appel tardif au VLR de l'abonné appelé (508) ;
le VLR de l'abonné appelé (508) est en outre configuré pour renvoyer un message d'accusé de réception d'insertion de données d'abonné à l'HLR de l'abonné appelé (502) ; et
l'HLR de l'abonné appelé (502) est en outre configuré pour renvoyer un message d'accusé de réception de mise à jour de localisation au VLR de l'abonné appelé (508).

7. Système selon la revendication 6, **caractérisé en ce qu'**après que l'abonné appelant appelle l'abonné appelé,
le GMSC (504) est en outre configuré pour envoyer un message d'envoi d'information de routage (SRI) à l'HLR de l'abonné appelé (502) ;
l'HLR de l'abonné appelé (502) est en outre configuré pour envoyer un message de requête de fourniture de numéro d'itinérance (PRN) au VMSC de l'abonné appelé (506) ;
le VMSC de l'abonné appelé (506) est en outre configuré pour fournir un message d'accusé de réception de fourniture de numéro d'itinérance (PRN ACK) à l'HLR de l'abonné appelé (502) ; et
après réception du message PRN ACK, l'HLR de l'abonné appelé (502) est en outre configuré pour mettre en oeuvre une étape d'envoi d'un message SRI ACK portant les informations de transfert d'appel tardif au GMSC (504).

8. Système selon la revendication 6, **caractérisé en ce que** le GMSC (504) est en outre configuré pour recevoir un message de libération de communication portant un motif de libération qui est envoyé par le VMSC de l'abonné appelé (506), et pour connecter l'appel à l'abonné indiqué dans les informations de transfert d'appel tardif selon le motif de libération et les informations de transfert d'appel tardif.

9. Système selon la revendication 6, **caractérisé en ce que** l'abonné appelé et l'abonné indiqué dans les informations de transfert d'appel tardif appartiennent à différents VMSC.
